# EUROPEAN PATENT APPLICATION

(11) **EP 4 696 119 A1**
(43) Date of publication of application: **18.02.2026**
(21) Application number: 25188113.2
(22) Date of filing: 08.07.2025
(51) Int. Cl.: A01B 69/04, A01D 41/12, B60W 60/00

(54) **SETTING FOLLOWER PATH PLAN BASED ON EQUIPMENT MODELS**

(30) Priority: 16.08.2024 US 202418806977
(71) Applicant: Deere & Company, Moline, IL 61265 (US)
(72) Inventor: FAUST, JEREMY JAMES, 68163 Mannheim (DE)
(74) Representative: Holst, Sönke

(57) **Abstract**

Generating a path plan for a follower machine is described. An operational parameter of a leader machine is obtained. A leader path plan for the leader machine is obtained. A follower path plan for a follower machine is identified based on the operational parameter and the leader path plan. At least a portion of the follower path plan is displayed at a display associated with the follower machine. In an example, the leader machine can be a combine and the follower machine can include a grain cart.

## Description

### TECHNICAL FIELD

This disclosure relates generally to agricultural machinery, and more specifically to setting a path plan for a follower machine using equipment models.

### BACKGROUND

In farming operations, different machine types are used for different farming phases. For example, strip tilling may involve the use of a strip-till machine, planting is done with a planter, fertilizing with a fertilizer spreader, weed management with sprayers, and harvesting with a combine harvester. Each of these machines may have different operational widths (i.e., the number of rows they can work on concurrently). To illustrate, a strip-till machine may prepare 12 rows, a planter might plant 24 rows, and a combine harvester might harvest 12 rows at a time.

### SUMMARY

Disclosed herein are implementations of generating path plans for follower machines.

A first aspect of the disclosed implementations is a method. The method includes obtaining an operational parameter of a leader machine; obtaining a leader path plan for the leader machine; identifying a follower path plan for a follower machine based on the operational parameter and the leader path plan; and displaying at least a portion of the follower path plan at a display associated with the follower machine.

A second aspect of the disclosed implementations is a system that includes one or more memories and one or more processors. The one or more processors are configured to execute instructions stored in the one or more memories to obtain an operational parameter of a leader machine, obtain a leader path plan for the leader machine, identify a follower path plan for a follower machine based on the operational parameter and the leader path plan, and display at least a portion of the follower path plan at a display associated with the follower machine.

A third aspect of the disclosed implementations is one or more non-transitory computer readable media storing instructions operable to cause one or more processors to perform operations including obtaining an operational parameter of a leader machine; obtaining a leader path plan for the leader machine; identifying a follower path plan for a follower machine based on the operational parameter and the leader path plan; and displaying at least a portion of the follower path plan at a display associated with the follower machine.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a block diagram of a system for setting a follower machine path plan based on equipment models.
FIG. 2A illustrates an example of using kinematic models to place an auger of a combine into the center of a grain cart attached to a tractor .
FIG. 2B illustrates parameters of a kinematic model of a leader machine.
FIG. 2C illustrates parameters of a kinematic model of the follower-implement combination.
FIG. 3A illustrates identifying of a path plan for a subsequent machine.
FIG. 3B illustrates generating a follower path plan based on a leader path plan.
FIG. 4 is a block diagram illustrating identifying a follower path plan.
FIG. 5 illustrate user interfaces associated with a path planning software, such as one of the path planning software or path planning software of FIG. 1.
FIG. 6 is an example of a computing device.
FIG. 7 is a flowchart of an example of a technique for generating a follower path plan for a follower machine based on a leader path plan of a leader machine.

### DETAILED DESCRIPTION

Farming technologies are known and used for generating path plans for subsequent machines based on the path of a first machine. A path plan, in the context of farming and agricultural machinery, is a pre-defined route or set of guidance lines that directs the movements of farming equipment across a field. A path plan ensures that various agricultural operations, such as planting, fertilizing, spraying, and harvesting, are carried out in an organized and efficient manner. For example, the lines driven by a planter can be used to generate corresponding guidance lines for each row unit, which are then used to guide subsequent machines like sprayers and harvesters. To illustrate, assume a field where a planter has sown seeds in 24-row sections. GPS data from this planting operation can be used to create a path plan for subsequent machines, such as a sprayer and a combine harvester: the sprayer may follow the same 24-row sections, and the combine harvester, which can handle 12 rows at a time, follows a path plan that directs it to harvest in two passes for each 12-row section planted.

In certain farming phases, more than one machine may be involved: a leader machine and a follower machine. For example, in the harvesting step, the combine harvester (e.g., the leader machine) is not the only machine that will be used; a tractor (e.g., the follower machine) to which a grain cart is attached for receiving crop from the leader machine is also present. The crop harvested by the combine harvester is dumped into the grain cart via an unloading auger, which transfers the crop from the combine's storage tank to the cart. As another example, during the spraying phase, a sprayer (e.g., the leader machine) may be accompanied by a nurse tank vehicle (e.g., the follower machine) that supplies the sprayer with chemicals, ensuring continuous operation without frequent refilling stops.

A conventional guidance solution for the follower machine (e.g., the tractor or nurse tank) synchronizes the speed and position of the follower relative to the leader machine (e.g., the combine harvester) based on a manually configured homepoint set between the leader and follower machines. The operator of the follower machine may set the homepoint by driving the follower machine to align it with a reference point on the leader machine, such as the endpoint of an unloading auger or the edge of a sprayer boom, and then configuring a guidance system of follower machine to maintain a specific offset distance and alignment relative to that reference point.

A "homepoint" refers to a designated relative position (e.g., an offset position) of one location (e.g., a point) one machine with respect to another location (e.g., another point) of another machine. A homepoint serves as a reference point for synchronizing the movements of a leader machine (e.g., a combine harvester), with a follower machine (e.g., a tractor towing a grain cart). The homepoint enables the leader machine to coordinate the speed and direction of the follower machine, enabling the follower machine to maintain an optimal position relative to the leader machine during operations, such as unloading grain. By setting a homepoint, the system (e.g., the combination of the leader and follower machines) can automate the alignment and movement of the machines, reducing the need for manual adjustments and improving the efficiency of the harvesting process.

However, the position of the follower relative to the leader is reactive, meaning it adjusts based on the leader's previous position rather than anticipating future movements. This results in slow adjustments to the position of the leader machine, causing situations where the operator of the follower machine may have to manually take control, and also leads to poor performance in even slight non-straight lines (e.g., curves). Another solution is to configure a separate path plan for the follower independent of the leader. Such a solution also does not work well for non-straight lines, such as curves or any sort of maneuver, such as around a waterway or obstacles.

Implementations according to this disclosure solve problems such as these by leveraging equipment models for generating a path plan (e.g., guidance lines) for a follower machine based on the path plan of a leader machine. For example, by leveraging detailed equipment models, proactive guidance lines can be automatically generated (e.g., created or configured) for the follower machine based on the guidance lines of the leader machine. More specifically, the equipment models can be used to identify an operational parameter (which may also be referred to as an alignment offset, positional offset, reference offset, kinematic offset, spatial offset, or offset parameter).

The operational parameter refers to the distance or measurement that defines the relative position of one machine component to another. In an example, the operational parameter can include the length of an auger of a combine. More specifically, the operational parameter can be or indicate an alignment (e.g., a lateral offset) of the follower machine with respect to the leader machine such that, based on the auger length, the endpoint (e.g., snout) of the auger aligns with the middle of a grain cart that is or is part of the follower machine.

The follower path plan (e.g., guidance lines for the follower machine) can be generated as part of a path planning process and can be shared with and used by the follower machine. This enables the follower machine to follow a pre-defined path relative to the leader machine, ensuring optimal alignment during operations.

In some implementations, a homepoint can be used, in combination with a follower path plan, as reference positions to synchronize the follower machine with the leader machine. Instead of merely reacting to the leader's past position, based solely on the homepoint, the follower machine can anticipate future movements using the follower path plan, which significantly improves performance in complex field conditions, such as curves and maneuvers around obstacles. Using follower guidance lines in combination with homepoints reduce the need for manual adjustments, enhance accuracy, and increase overall operational efficiency in agricultural activities.

To describe some implementations in greater detail, reference is first made to examples of systems, machines, implements, hardware and software structures used to implement a system for setting a path plan for a follower machine using equipment models.

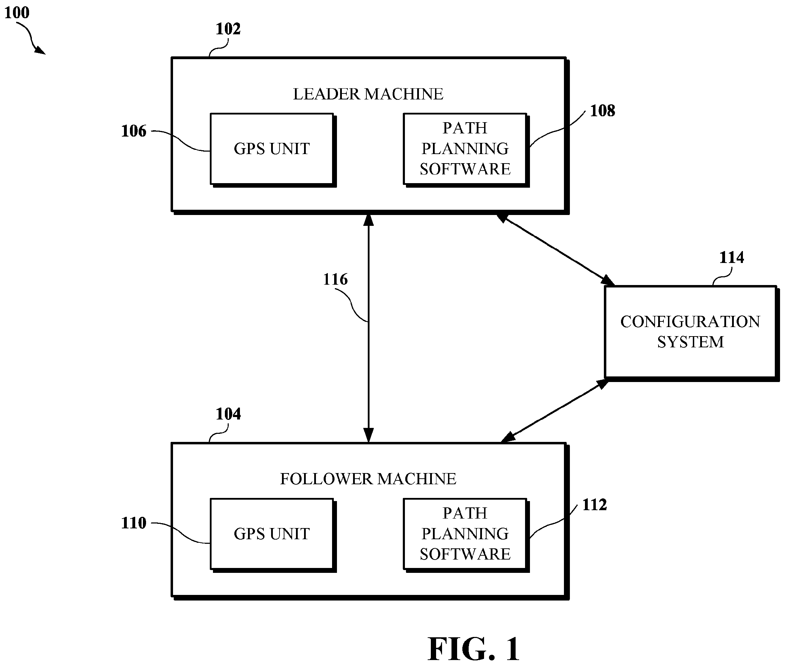

FIG. 1 is a block diagram of a system 100 for setting a follower machine path plan based on equipment models. The system 100 includes a leader machine 102 and a follower machine 104. As the leader machine 102 moves along a leader line in the field, the follower machine 104 may follow a follower guidance line identified (e.g., set, determined, configured, or calculated) by the system 100 based on the path plan of the leader machine 102. The leader machine 102 can be a combine harvester, a forage harvester, a sugar cane harvester, or any other type of machine that is to be followed by a follower machine. In an example, the follower machine can be a tractor with an attached implement. The implement may be a grain cart, a forage wagon, or multiple carts. The follower machine can be any type of follower machine that traverses a field at a maintained relative position with respect to the leader machine.

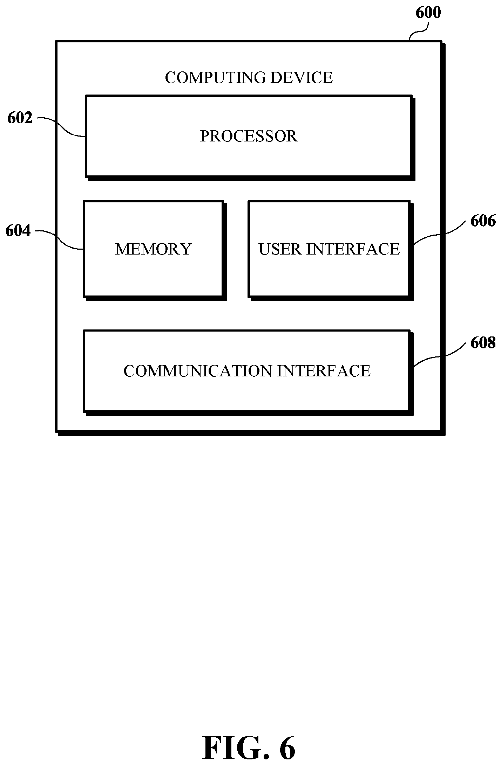

For simplicity, this disclosure uses statements such as "machine X performs an action Y." These statements should be understood to mean that a computing device (e.g., a controller) within machine X performs the action Y or executes instructions to cause machine X to perform the action Y. A software application, which is executable by the computing device and may be included in or work in conjunction with machine X, can also perform action Y or cause machine X to perform action Y. The computing device may be as described with respect to FIG. 6. Additionally, for brevity, this disclosure sometimes uses the term "follower" or "follower machine" to refer to the combination of a follower machine (e.g., a tractor) that includes a GPS unit and an implement (e.g., a cart) attached thereto. However, at other times, the follower and the implement are referred to separately and the combination of the follower and implement may be referred to as the follower-implement combination. The intended meaning should be clear from the context.

The leader machine 102 is shown as including a GPS unit 106 and a path planning software 108. In some implementations, the leader machine 102 may not include the path planning software 108. The follower machine 104 is shown as including a GPS unit 110 and a path planning software 112. A GPS unit can be used to determine the precise geographic location of the respective machine by receiving signals from multiple GPS satellites and calculating the machine's position based on the time delay of the received signals. Alternatively, other positioning technologies such as Real-Time Kinematic (RTK) GPS, Radio Frequency Identification (RFID), Bluetooth Low Energy (BLE) beacons, Differential GPS (DGPS), and Long-Range Navigation (Loran) may be used to accomplish the same purpose.

The path planning software 108 can be used to obtain (e.g., identify, select, or receive) a path plan (e.g., a set of guidance lines) that the leader machine 102 is to traverse over on a field. The path planning software 112 can be used to identify (e.g., calculate or receive) a path plan for the follower machine. The path plan of the leader machine 102 is referred to as the "leader path plan;" and the path plan of the follower machine 104 is referred to as the "follower path plan."

The leader path plan is derived based on the traversal of the field by another or prior machine, such as a planter that has previously sown seeds in the field. This initial traversal provides the foundational data for creating an accurate leader path plan for the leader machine. The follower path plan, on the other hand, can be derived from the leader path plan and the leader kinematic model of the leader machine 102. A kinematic model (e.g., the leader kinematic model) may include detailed information about the physical characteristics and movement capabilities of the machine (e.g., the leader machine), which allows the system 100 to generate a precise and effective path plan for the follower machine that maintains optimal alignment and synchronization with the leader machine. The kinematic models can be used to identify an operational parameter of the leader machine that is used to identify the follower path plan.

The leader kinematic model can be used to identify an initial alignment position (e.g., a lateral offset) between the leader machine 102 and the follower machine 104. To illustrate, and without limitations, an approaching grain cart tractor can be guided to a predetermined lateral "home" position alongside a combine for unloading. The home position can be based on the operational parameter, which can include an auger length of the leader machine. The homepoint is a point in the leader machine 102 fixed coordinate system and can be based on a GPS unit of the leader machine 102. The homepoint can be thought of as a point in space that moves with the fixed coordinate system of the leader machine 102. In an example, and as further described herein, a follower kinematic model of the follower machine can additionally be used to identify the initial alignment position. To illustrate, when using the leader kinematic model alone, the initial alignment position may be any number of lateral positions along a line. The homepoint can be set (such as manually by an operator of the follower machine) to one of the points on the line. On the other hand, when both of the leader kinematic model and the follower kinematic model are used, then the initial alignment position can be a particular point.

After the initial alignment, the kinematic models (e.g., the operational parameter obtained therefrom) can be used to identify a follower path plan for the follower machine 104. The follower path plan can be followed, such as autonomously, by the follower machine 104 over straight lines. When traversal of the field includes curving or other such maneuvers (collectively, maneuvers), the combination of the homepoint and follower path plan are used to keep the follower machine 104 properly aligned with the leader machine 102. During a maneuver, while the follower machine 104 is following the follower path plan (e.g., a line thereof), the inline distance to the homepoint is maintained. That is, the homepoint position mandates a position based on an inline offset from the follower, while the path plan dictates the lateral distance. Thus, the follower machine 104 will follow the homepoint based on the speed of the leader machine to maintain the inline offset and will steer laterally to adhere to the path plan. As such, the follower machine 104 may slightly drift from the follower path plan in order to maintain the distance to the homepoint.

Each of the path planning software 108 and the path planning software 112 can be or include programs, subprograms, functions, routines, subroutines, operations, executable instructions, and/or the like for, *inter alia* and as further described herein, setting homepoints using equipment models and using the set homepoints to align machines, such as a follower machine to a leader machine. A path planning software can be executed by a computing device, such as the computing device 500 described with respect to FIG. 6.

A communication path 116 may be established between the leader machine 102 and the follower machine 104 via which the leader machine 102 may regularly (e.g., at a frequency of 50 Hertz) transmit at least its GPS position to the follower machine 104. The leader machine 102 may also transmit its speed and/or direction to the follower machine 104. The communication path 116 can be established using various technologies, including but not limited to Wireless Fidelity (Wi-Fi) such as a wireless local area network (WLAN), which allows machines to communicate within a certain range and can be effective for short-range communication and can support high data transfer rates; cellular networks (such as utilizing mobile networks (e.g., 4G, 5G)); Bluetooth, which is a short-range wireless technology standard that enables machines to exchange data over short distances; radio frequency, which uses specific radio frequencies for communication; satellite communication, which employs satellite links to transmit data; or Ultrawideband (UWB), which is a wireless communication protocol that uses a wide spectrum of frequencies for short-range, high-bandwidth communications.

As mentioned above, that a homepoint is set for the follower machine 104 based on the leader machine 102 includes that the homepoint is set based on a kinematic model (referred to as a "leader kinematic model") of the leader machine 102 and a kinematic model (referred to as a "follower kinematic model") of the follower machine 104. If an implement is attached to the follower machine 104, then the homepoint may be set based on the leader kinematic model, the follower kinematic model, and the implement kinematic model. For brevity, the implement kinematic model may be considered to be part of the follower kinematic model.

A kinematic model is a mathematical representation of the geometric (and/or motion) characteristics of a machine or implement. A kinematic model may include parameters (e.g., measurements) such as the position, orientation, sizes, and other geometric characteristics of at some components of the machine or implement. The leader kinematic model and the follower kinematic model enable precise calculation of the homepoint by considering the physical and operational constraints of both of the leader machine 102 and follower machine 104, ensuring accurate synchronization during operations.

An inverse kinematics process can be used to identify (e.g., calculate or determine) and/or set a homepoint. Inverse kinematics is a process used to calculate the required joint parameters to place a part of a system, such as the end of a robotic arm or the unloading auger of a combine harvester, at a desired position. In the context of agricultural machinery, inverse kinematics can be employed to automatically position, for example, a combine's unloading auger at a specific location relative to, for example, a grain cart attached to a follower tractor. By calculating the necessary angles and extensions of the combine's movable components, precise alignment for efficient and accurate unloading is possible. Mathematical (kinematic) models to determine the joint configurations needed to achieve the desired end position are used.

To illustrate, and without limitation, in the case that the leader machine 102 is a harvesting combine, the leader kinematic model may include, as further described herein, details such as a turret offset, an auger length (or more accurately, the location of the snout or endpoint of the auger), a GPS unit location, and unloading position of the leader machine; and the follower kinematic model may include, as further described herein, details such as a drawbar location, grain cart dimensions, a GPS unit location, and receiving position of the follower machine. Which dimensions of a machine or implement are included in a kinematic model usable in setting a homepoint depends on the machine or implement itself.

A kinematic model may be identified using various techniques. In an example, the kinematic model for a machine may be retrieved from a remote configuration system 114 that includes or has access to configuration data, where each machine's specific parameters are stored. The kinematic model can also be identified based on an identifier, such as a Vehicle Identification Number (VIN), of the machine, which enables the retrieval of pre-stored kinematic parameters associated with that VIN, such as from the remote configuration database. An implement kinematic model may be identified based on a product model number or serial number of implement. The kinematic model associated with a machine or implemented can be stored in any suitable format or data structure. In an example, the kinematic model can be stored as key-value pairs, where the keys a parameter names and the values are the corresponding parameter values. In an example, the configuration data can be implemented as a lookup table that receives a machine or implement identifier and outputs the corresponding kinematic model.

In another example, the path planning software may provide user interfaces that enable an operator to manually enter parameters of a kinematic model, allowing for customization based on real-time conditions or unique machine configurations. In an example, a machine can be configured to include its own kinematic model, which another machine can obtain directly by transmitting a request for the kinematic model via machine-to-machine communication. Moreover, kinematic models can also be dynamically generated using real-time sensor data from the machine, inertial measurement units (IMUs), and other onboard sensors (e.g., removable sensors).

In an example, removable sensors may be temporarily attached at different defined locations of a machine or implement, allowing the path planning software to obtain measurements (parameters) for the kinematic model based on the locations of the sensors. These sensors can include accelerometers, gyroscopes, ultrasonic sensors, or other types of positional and motion detection devices. The data collected from these removable sensors can be used to accurately map the geometric and kinematic characteristics of the machine, which is then stored for later retrieval. For example, a sensor attached to the tip of an unloading auger can provide precise positional data that is used to update (or set) the kinematic model of the leader machine 102. Similarly, sensors placed at various points along a grain cart can help determine its dimensions and alignment relative to the tractor. In an example, the path planning software may identify a list of sensors currently attached to the machine and guide the operator to associate each identified sensor with a specific component, location, or measurement on the machine or implement.

Setting the homepoint can be triggered by various conditions and actions.

Setting the homepoint may be triggered is when the follower machine 104 enters an operational zone of the leader machine 102, as detected by the GPS units or other positional sensors. The "operational zone" of the leader machine 102 can be a designated area (e.g., a geo fence) around the leader machine 102 where the follower machine 104 can effectively synchronize its movements and operations. The operational zone can be defined based on the positional data of the leader machine 102. When the follower machine 104 enters the operational zone, the follower machine 104 can be guided to align itself with the leader machine 102 to perform synchronized operations. For example, in the context of a combine harvester (leader machine) and a tractor with a grain cart (follower machine), the operational zone can be the area to the side of the combine harvester where the tractor and grain cart can position themselves to receive the grain from the combine's unloading auger. The path planning software 112 can be configured to ensure that once the tractor and grain cart enter this operational zone, they can be guided to the precise homepoint for efficient and accurate unloading.

In another example, the homepoint can be set when the operator of the follower machine 104 invokes a user interface control of the path planning software 112, signaling that the follower machine 104 is to be aligned with the leader machine 102. In another example, the path planning software 112 may trigger the setting of the homepoint automatically based on predefined operational criteria, such as the proximity of the follower machine 104 to the leader machine 102 or the detection of specific operational states (e.g., unloading mode).

In an example, the follower path plan can be identified after the homepoint is set. In another example, the follower path pan can be identified before the homepoint is set. Minimally, the operational parameter may be determined or used to set the follower path plan. To set the follower path plan, the path planning software 112 first obtains the leader path plan. The leader path plan can be obtained from the leader machine 102 (such as from the path planning software 108), from the remote configuration system 114, or from any other source that may include the leader path plan.

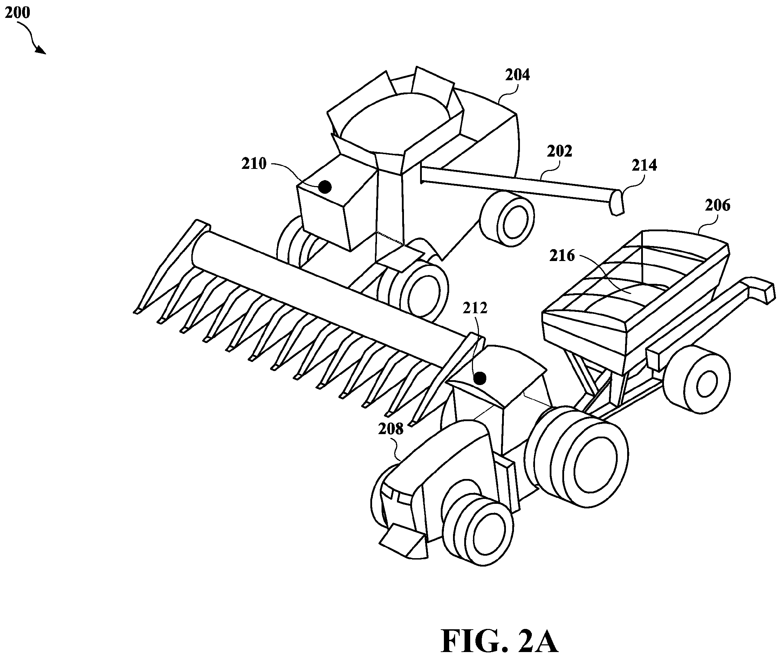

FIG. 2A illustrates an example 200 of using kinematic models to place an auger 202 of a combine 204 into the center of a grain cart 206 attached to a tractor 208. The combine 204 can be the leader machine 102 of FIG. 1 and the combination of the tractor 208 and the grain cart 206 can be the follower machine 104 of FIG. 1. As such, the combine 204 includes a GPS unit 210 and the tractor 208 includes a GPS unit 212. The GPS unit 210 is located at an (X, Y) position within a coordinate system defined with respect to the combine 204, where the origin of the coordinate system is a defined point of the combine 204 (e.g., the center of a drive axle of the combine 204). Similarly, the GPS unit 212 is located at an (X, Y) position within a coordinate system defined with respect to the tractor 208, where the origin of the coordinate system is a defined point of the tractor 208 (e.g., the center of the rear axle of the tractor 208).

Depending on the machine, several dimensions may have to be combined to set the homepoint. As further described herein, several dimensions associated with the combine 204 are combined and several dimensions of the follower-implement combination (e.g., the combination of the tractor 208 and the grain cart 206) are combined to place the auger 202, and more specifically a spout 214 of the auger 202, in the middle (e.g., over a middle point 216) of the grain cart 206. The homepoint is set based on the unloading position (e.g., location) of the combine 204 (e.g., the leader) relative to the position of the GPS unit 210 of the combine 204, and the unloading position of the grain cart 206 relative to the position of the GPS unit 212 of the tractor 208 (e.g., the follower). For example, to find the leader unloading position, the follower is configured with the position of the unloading auger (or spout) relative to the GPS unit 212 in (X, Y) coordinates.

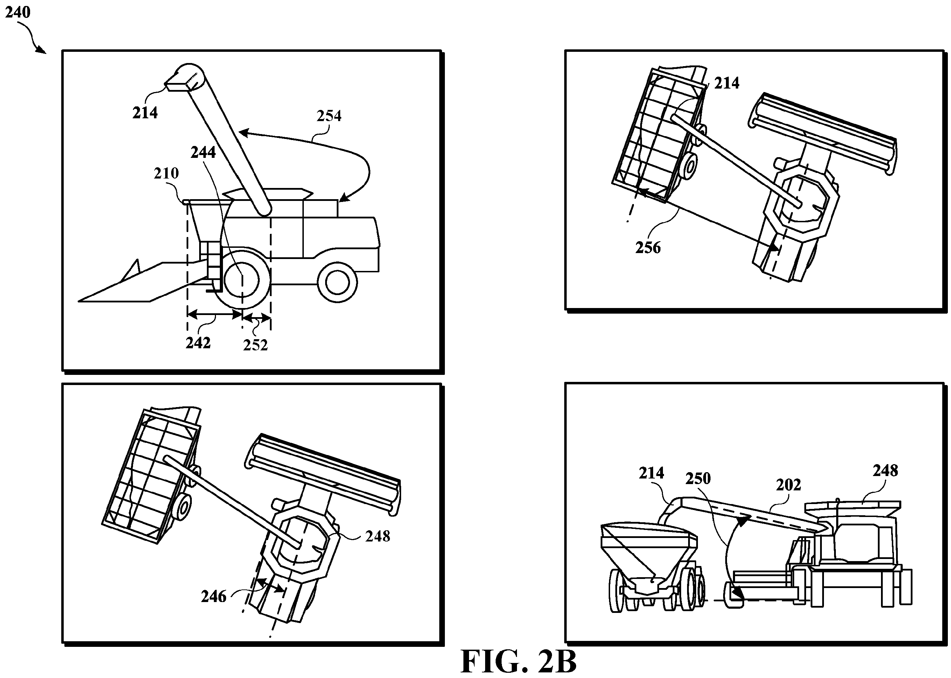

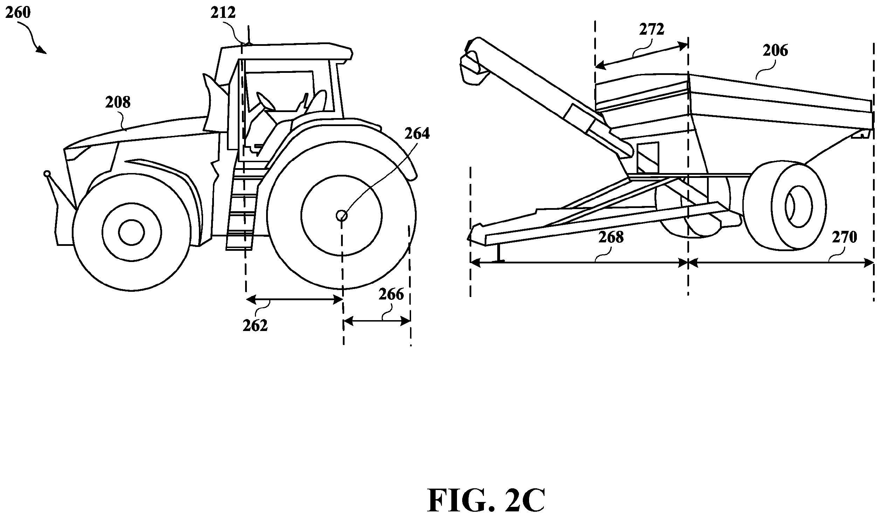

Again, given the combination of the machines shown in FIG. 2, the homepoint is set based on an alignment of the spout 214 over the middle point 216. However, with other types of leader and/or follower machines, different alignments or geometric constraints may need to be met (e.g., set, configured, or determined) to set a homepoint.

FIG. 2B illustrates parameters 240 of a kinematic model of a leader machine (e.g., the combine 204 of FIG. 2A). The parameters 240 are used to identify a location of the spout 214 with respect to the GPS unit 210. A parameter 242 indicates the (X, Y) location of the GPS unit 210 relative to the origin 244 of the combine 204. That is, the parameter 242 indicates the inline position and the lateral position of the GPS unit 210. A parameter 256 indicates the length (e.g., the endpoint) of the auger 202, which can be the distance from the center of the combine 204 to the tip (e.g., the spout 214) of the auger. A parameter 246 indicates the lateral offset of a turret 248 of the combine 204. A parameter 250 indicates the pitch of the auger 202.

A parameter 252 indicates the inline offset of the auger 202. A parameter 252 indicates the full swing angle of the auger 202, if the auger swings at all. The full swing of the auger can be utilized with respect to machines, such as on combines, that do not include positional sensors capable of indicating the auger's angle. Consequently, it may only be possible to ascertain whether the auger is at 100% or 0% swing based on, for example, a timer from a hydraulic solenoid. Trigonometric functions can be employed to determine the position where the crop is discharged, based on the auger length and the angle (e.g., hypotenuse*cos[full swing angle] = Y offset in leader fixed coordinate, and hypotenuse*sin[full swing angle] = Y offset in leader fixed coordinate, wherein hypotenuse is the auger length). In some configurations that include a position sensor, the landing point of the crop can be calculated based on auger swing in real time (e.g., based on data from the positional sensor).

The kinematic model of the combine 204 may additionally include data (e.g., a flag) indicating whether the auger 202 is folding or not; and data indicating a fold status of the auger 202 (e.g., whether the auger 202 is extended or retracted). A person skilled in the art understands and can derive the transformations necessary, such as based on inverse kinematics, to place the spout 214 of the auger 202 relative to the GPS unit 210 based on the parameters 240.

At least some of these parameters may be associated with the combine 204 and may not be changeable. For example, any parameters related to the turret 248 may be fixed based on an identifier (VIN) of the combine 204. However, the auger may be changeable. As such, a path planning software associated with one of the combine 204 or the tractor 208 may enable an operator to set parameters associated with the specific auger used. For example, the path planning software may enable the operator to input or adjust parameters such as the length and angle of extensions or retractions of the auger, which might change based on the specific operational requirements or equipment modifications.

It is noted that the parameter 250 (the auger pitch) is not necessary for setting the homepoint. However, the parameter 250 can be useful for other applications, such as an application that requires the placement of a camera at the spout 214. The parameter 250 can be used to indicate the necessary pitch of the camera. The pitch of the auger can be used to find (e.g., calculate, identify, determine, etc.) the position of the camera relative to a reference coordinate system on the leader machine. Inverse kinematics are then used to determine the orientation of the camera (camera coordinate system) to transform reference frames, allowing the images to be related back to the coordinate system of the combine. The camera (e.g., images obtained thereby) may be used in automatically positioning the auger 202 over the grain cart 206 to ensure efficient unloading of the harvested grain. The camera can be calibrated by marking the positions over the front and back of the grain cart 206, so that the edges and center of the grain cart 206 can be detected. During the unloading process, real-time images from the camera enable the path planning software to make necessary adjustments to the position (e.g., swing) of the auger 202, ensuring accurate and even distribution of the grain in the grain cart 206. This information can be used to fill the cart evenly by moving the tractor via the machine sync application. Moving the tractor via the machine sync application includes making a real-time adjustment to the homepoint via user interfaces of the machine sync application.

FIG. 2C illustrates parameters 260 of a kinematic model of the follower-implement combination (e.g., the combination of the tractor 208 and the grain cart 206 of FIG. 2A). The parameters 260 are used to identify a location of the middle of the grain cart 206 with respect to the GPS unit 212 of the tractor 208. A parameter 262 indicates the (X, Y) location of the GPS unit 212 relative to the origin 264 of the tractor 208. A parameter 266 indicates a location of a drawbar pin hole, to which the grain cart 206 may be hitched. A parameter 268 indicates a tongue length. A parameter 270 indicates the length of the grain cart 206. A parameter 272 indicates the width of the grain cart 206. Based on these parameter, the location of the center of the grain cart 206 can be determined.

In some implementations or configurations, the width of the cart (e.g., the parameter 272) may not be required. To illustrate, an assumption can be made that the unloading will always target the center of the grain cart 206, and that all drawbars are centrally positioned on the cart, making the centerline of the tractor 208 sufficient for this purpose. However, when these assumptions do not hold true, a more complex kinematic model incorporating the width of the grain cart 206 may be necessary.

At least some of these parameters may be associated with the tractor 208 and may not be changeable. For example, any parameters related to the location of the GPS unit 212 and the drawbar pin hole may be fixed based on an identifier (VIN) of the tractor 208. However, the cart may be changeable. As such, a path planning software associated with one of the combine 204 or the tractor 208 may enable an operator to set parameters associated with the cart used. For example, the path planning software may enable the operator to input or adjust parameters such as the length of the grain cart and tongue (if any). In an example, the path planning software may enable the operator to enter or select an equipment model for one or more carts attached to the tractor 208.

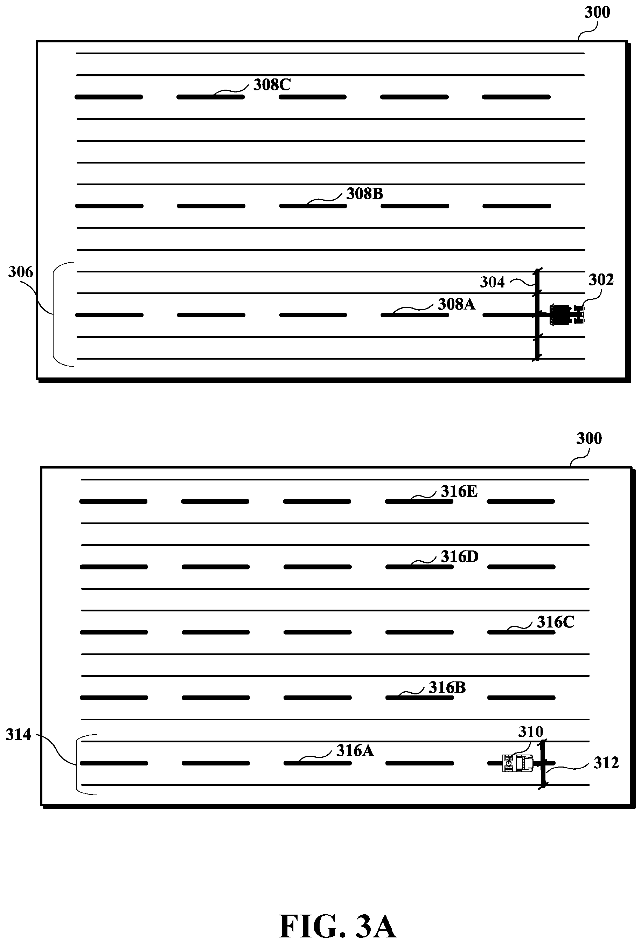

FIG. 3A illustrates identifying of a path plan for a subsequent machine. A subsequent machine is one that performs operations in a field following a previous (e.g., initial) farming operation by a previous machine. The path plan is generated based on the traversal of the field by the previous machine. As mentioned, a path plan includes a set of guidance lines that direct the subsequent machine's movement across the field, ensuring precise and efficient execution of its tasks. These guidance lines are derived from the recorded movements of the previous machine, ensuring that the subsequent machine operates efficiently and precisely within the same spatial parameters. By basing the path plan on the previous machine's traversal, field operations are optimized, reducing overlap and gaps.

Managing guidance lines throughout the crop year from strip till to harvest is a complex task. The difficulty of maintaining pre-plant fertilizer strips, avoiding crop rows while spraying, and accurately counting guest rows at harvest are well-known challenges in agriculture. Automatically creating guidance lines can optimize field operations across different phases of farming. Guidance lines can be generated using crop row maps created during a previous (e.g., first) pass through the field, whether it is strip tilling or planting. For example, farmers need only place an implement receiver on their planter or strip-till rig during the first pass to map the necessary data. Subsequently, path planning software, such as the path planning software 108 of FIG. 1, automatically generates guidance lines for subsequent passes, such as planting, spraying, or harvesting, regardless of equipment width. In an example, the path plan may be generated by a remote system, such as the remote configuration system 114 of FIG. 1 and received by the path planning software. In such a case, the path plan is said to be generated offboard (i.e., not at the leader machine 102 itself). This automation ensures that each pass begins quickly and confidently, enhancing the efficiency of farming operations by maintaining established guidance lines and reducing the risk of partial width passes. By generating guidance lines, yield potential can be protected by accurately planting rows to optimize nutrient investment and minimizing soil disturbance, while keeping machine tires between rows to prevent crop damage throughout the growing season.

A portion 300 of a field is first traversed by a first machine 302 to which an implement 304 that can process 5 rows (such as rows 306) is attached. Data (i.e., traversal data) associated with the traversal of the portion 300 by the first machine 302 is recorded. For example, locations and lengths of the traversal lines 308A-308C traversed by the first machine 302. Details of the implement 304 may also be included in the traversal data. The traversal data can be transmitted to a configuration system, such as the configuration system 114 of FIG. 1.

Subsequently (e.g., later during the season), the portion 300 is traversed by a second machine 310 to which an implement 312 that can process 3 rows (such as rows 314) is attached. As such, a path plan that includes guidance lines 316A-316E can be automatically generated for the second machine 310. In an example, the path plan can be generated by the configuration system and transmitted to the second machine 310 (e.g., to a path planning software therein). In another example, the path plan can be generated by the path planning software of the second machine 310 based on the traversal data received from the configuration system.

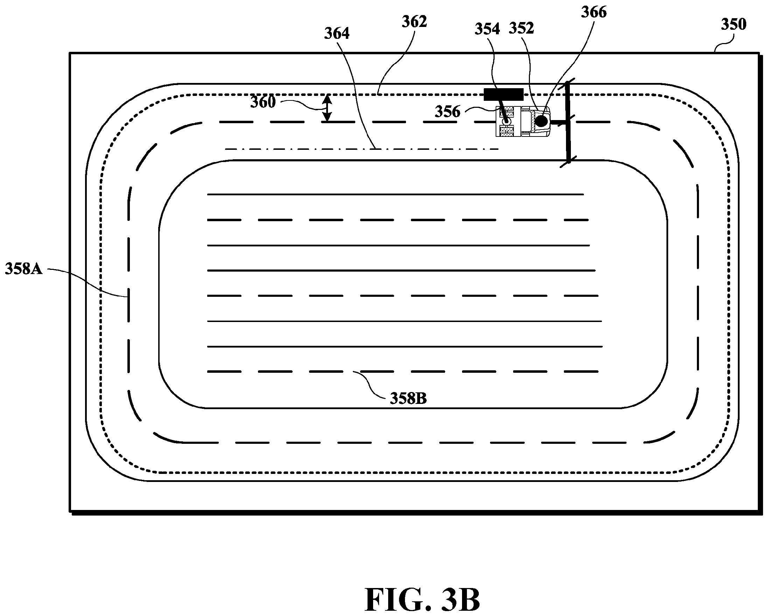

FIG. 3B illustrates generating a follower path plan based on a leader path plan. FIG. 3B illustrates a portion 350 of a field that is being, for example, harvested by a leader machine 352 (which may be a combine harvester). A follower machine 354 (which may include a grain cart, such as tractor to which the grain cart is attached) receives crop from the leader machine 352 via an auger 356 of the leader machine 352. The identified leader path plan of the leader machine 352 includes guidance lines shown in dark, dashed lines, such as guidance lines 358A and 358B.

A follower path plan for the follower machine 354 can be identified based on the leader path plan and kinematic models of the leader machine 352 and the follower machine 354. As mentioned above, operational parameter is used to identify the follower path plan. Minimally, auger dimensions (e.g., length) of the auger 356 can be used to identify a lateral offset 360 of the follower machine with respect to the leader machine 352. The follower path plan can then mirror the leader path plan but is offset by the lateral offset 360. As such, the follower path plan includes a guidance line 362. Other guidance lines of the follower path plan are not shown.

The follower path plan may depend on which side of the leader machine 352 the follower machine 354 is placed, the direction of travel of the leader machine 352, or the direction in which the auger 356 extends. To illustrate, as shown in FIG. 3B, the leader machine 352 is traveling (e.g., harvesting) in an Eastward direction and, given that the auger 356 extends Northward from the leader machine 352, then the guidance line 362 is identified to be on the left side of the leader machine 352; on the other hand, if leader machine 352 were traveling in the opposite direction (e.g., is turned 180 degrees), then the follower path plan would instead include a guidance line 364, which is partially shown. In some implementations, the follower path plan may include both of the guidance lines 362 and 364. The guidance lines of the follower path plan keep the follower machine 354 aligned with the leader machine 352. As such, a more accurate and automated way for the follower machine 354 (e.g., a grain cart) to follow the leader machine 352 (e.g., a combine) is provided, reducing manual adjustments and improving performance in various field conditions. The follower machine 354 can use the GPS data and the identified guidance lines to steer itself and keep in line with the movement of the leader machine 352.

Identifying the follower path plan may include setting a homepoint 366. The homepoint 366 can be useful when the follower machine 354 is to perform certain maneuvers, such as curving or any maneuver around obstacles. The follower machine 354 continuously aims to reach and maintain the homepoint 366 by adjusting its speed and direction, ensuring smooth and accurate following, while adhering to the guidance lines of the follower path plan.

To illustrate, because the leader machine 352 and the follower machines 354 may have different turning radii, the follower machine 354 may end up hitting the implement attached to the leader machine 352 while performing maneuvers (e.g., turning). By following the guidance line while maintaining the distance to the homepoint 366, the follower machine 354 can perform maneuver (e.g., navigate curves) with significantly better performance, maintaining alignment and staying in the intended guidance line without deviating or contacting the leader machine 352. Said another way, the follower machine 354 operates by targeting the homepoint 366 along its designated guidance line 362, which may be determined based on the length of the auger 356 of the leader machine 352 and lateral offset 360 accordingly. As such, the follower machine 354 consistently matches the speed and trajectory required to reach and maintain the homepoint 366, thereby optimizing alignment and operational efficiency during complex maneuvers.

The follower machine 354 continuously uses the homepoint 366 to match its inline position with the leader machine 352, regardless of straight lines or curves in the path plan. As such, the follower machine 354 maintains proper alignment with the leader machine 352.

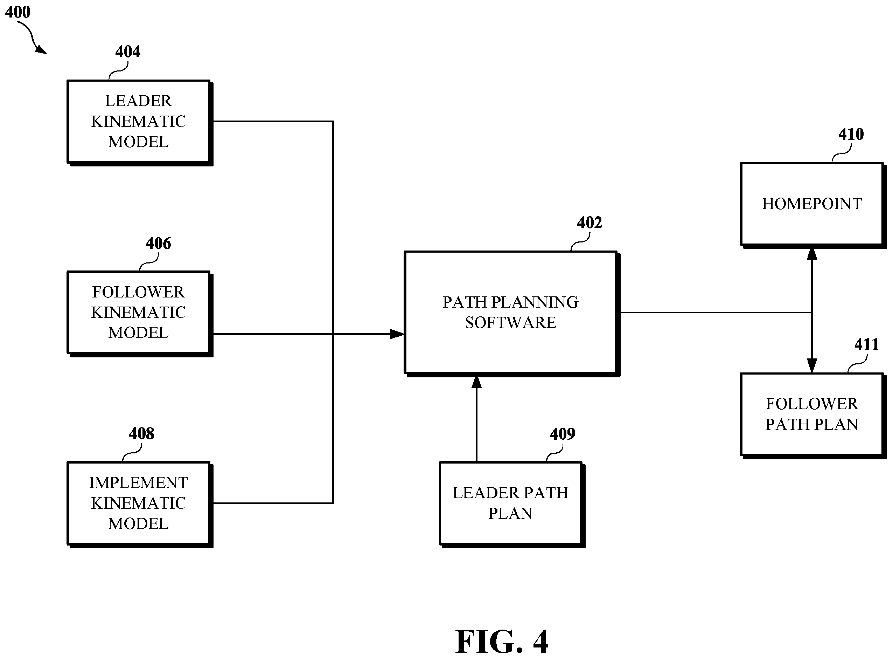

FIG. 4 is a block diagram 400 illustrating identifying a follower path plan. A path planning software 402, such as one of the path planning software 112 of FIG. 1, uses a leader kinematic model 404 associated with a leader machine, a follower kinematic model 406 associated with a follower machine, an implement kinematic model 408 associated with an implement attached to the follower machine, and a leader path plan 409 to set (e.g., determine or calculate) a homepoint 410 and a follower path plan 411. The leader path plan 409 and the follower path plan 411 can be digitally represented in any suitable data structure or format.

In an example, the path planning software 402 may receive identifiers associated with the leader machine, the follower machine, and the implement to retrieve the corresponding kinematic models.

In an example, when a particular cart is connected to a follower, the operator may select, via user interfaces associated with the path planning software 112, the implement via machine configurator or via work plans sent from an operations center to path planning software 112. When a connection is established between the leader and follower, the leader/follower information can be automatically shared between the leader and follower machines over a communication path, such as the communication path 116. As such, the parameters (e.g., measurements) of the respective kinematic models can be created and shared to set the homepoint. As already described, a homepoint can be set by summing the positions in X/Y coordinates to appropriately place the initial homepoint.

The follower path plan 411 can be characterized by the homepoint 410, which can be used to identify a lateral offset between the leader machine and the follower machine taking into consideration an operational parameter of the leader machine. As already mentioned, the operational parameter can be a length of an auger of the leader machine. The follower path plan 411 can mirror (e.g., can be parallel to) the leader path plan 409.

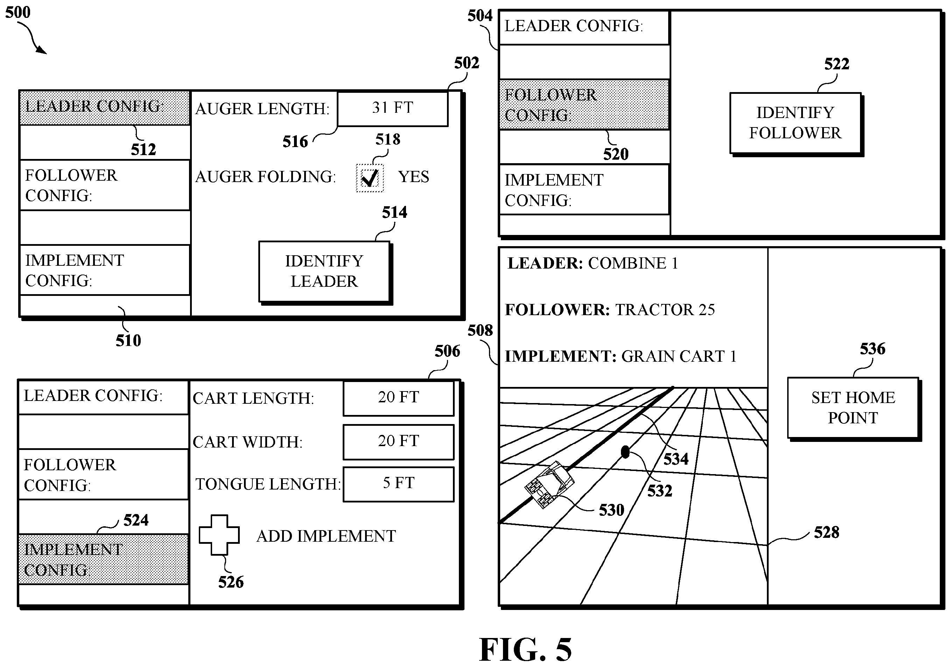

FIG. 5 illustrate user interfaces 502-508 associated with a path planning software, such as one of the path planning software 108 or path planning software 112 of FIG. 1. The user interfaces 502-508 enable an operator, such as of a follower machine or a leader machine, to select and/or configure the leader machine, the follower machine, and/or one or more implements connected to the follower machine. The user interfaces 502-506 include a machine selection area 510 that includes controls selectable by the operator. It is noted that the disclosure herein is not limited to or by the user interfaces 502-508 described herein. For example, more, fewer, or different arrangements or user interface controls are possible. The user interfaces 502-508 are further described from the perspective of an operator of the follower machine. That is, the user interfaces 502-508 are assumed to be presented to an operator of the follower machine via a path planning software, such as the path planning software 112 of FIG. 1.

In response to selecting a control 512, the user interface 502 can be displayed by the path planning software enabling the operator to select and/or configure the leader machine. For example, by selecting control 514, the path planning software enables the operator to select the leader machine. For example, the path planning software may enable the operator to select the leader machine from available leader machines. The available leader machines may be associated with a particular farming operations, farmer, or organization. In another example, and as described above, the leader machine may automatically be identified and selected by the path planning software, such as based on a proximity of the follower machine to the leader machine and/or in response to a connection path, such as the communication path 116 of FIG. 1, being established between the follower and leader machines. The leader kinematic model is then identified (e.g., selected, obtained, retrieved, etc.) in response to the leader machine being identified.

As mentioned above, certain components of the leader machine may be replaceable or exchangeable. For example, the auger of a combine may be changeable. As such, the user interface 502 enables the operator, such as via controls 516-518, to configure additional parameters of the leader kinematic model. While not specifically shown, the user interface 502 may also include (e.g., display) parameters of the identified leader kinematic model. For example, the user interface 502 may additionally display the GPS lateral offset and the GPS inline offset of the GPS unit of the leader machine, and the lateral turret offset, the auger pitch, amongst other parameters of the leader kinematic model.

In response to selecting a control 520, the user interface 504 can be displayed by the path planning software, enabling the operator to select and/or configure the follower machine. For example, by selecting control 522, the path planning software enables the operator to identify the follower machine. The path planning software may enable the operator to select the follower machine from a list of available follower machines. Once the follower machine is identified, the follower kinematic model can then be identified (e.g., selected, obtained, retrieved, etc.) accordingly.

The user interface 504 may enable the operator to configure various parameters of the follower kinematic model, such as connection type (e.g., drawbar, rear three-point connection, front three-point connection, wagon hitch, etc.) of an implement. The user interface 504 may display parameters of the identified follower kinematic model. For example, the user interface 504 may display the GPS lateral offset and the GPS inline offset of the GPS unit of the follower machine as well as the connection offset (such as the offset of a drawbar, the offset of a rear three-point connection, an offset of a front three-point connection, an offset of a wagon hitch, as the case may be).

In response to selecting a control 524, the user interface 506 can be displayed by the path planning software, enabling the operator to configure implements (e.g., zero or more implements) attached to the follower machine. For example, the user interface 506 enables the operator to input or modify various parameters of an implement, such as the cart length, cart width, and tongue length. The user interface 506 includes controls that enable the operator to add additional implements by selecting control 526, which opens additional configuration options for the new implement. To identify an implement, the operator may select from a list of available implements types.

The user interface 506 may display parameters of the identified implement kinematic model, providing fields for the operator to input specific measurements. For instance, the operator can enter the length and width of the grain cart, as well as the length of the tongue connecting the cart to the tractor. The user interface 506 may display additional parameters of an implement kinematic model. When more than one implement is added as an attachment to the follower machine, the user interface 506 enables the operator to provide (e.g., enter) parameters (e.g., dimensions) related to the connection (e.g., rear connection) between the added implement and the implement to which the added implement will be attached.

After the operator configures the leader machine, the follower machine, and the implement(s), the path planning software obtains the leader path plan of the leader machine to identify the follower path plan of the follower machine. The leader path plan can be obtained from the leader machine itself or from a remote configuration system, such as the remote configuration system 114 of FIG. 1. In an example, the path planning software may obtain the follower path plan from the remote configuration system. For example, the path planning software of the follower machine may transmit, to the remote configuration system, identifiers of the follower machine, leader machine, and/or implement and receive, from the remote configuration system, the follower path plan.

The user interface 508 includes a virtual map 528, which visually represents a follower machine 530, a calculated homepoint 532, and at least a portion of the follower path plan (e.g., a guidance line 534 of the follower path plan). The purpose of this user interface is to guide the alignment of the follower machine 530 with the homepoint 532 and the identify to an occupant (e.g., an operator) of the follower machine the traversal lines of the follower machine.

A control 536 may be used by the operator to initiate or confirm the alignment process. By selecting the control 536, the operator can command the follower machine to start moving according to the path plan, either manually or autonomously.

FIG. 6 is an example of a computing device 600. The computing device 600 is shown as including a processor 602, a memory 604, a user interface 606, and a communication interface 608. The computing device may be implemented by a machine, such as the leader machine 102 and/or the follower machine 104 of FIG. 1. The computing device 600 may facilitate communication between the machine and other computing devices, which may be remote from the machine. The computing device 600 can execute instructions such as those of a path planning software.

The processor 602 may be a microprocessor, and may include a single processor or multiple processors. A processor may have a single processing core or multiple processing cores. The processor 602 may be or include other types of devices, or multiple devices, not existing or hereafter developed, configured for manipulating or processing information. The computing device 600 may include multiple processors interconnected in one or more manners, including but not limited to, hardwired or networked (e.g., wirelessly networked). By way of example, the operations of the processor 602 may be distributed across multiple devices or units that may be coupled directly or via a local area or other suitable network. The processor 602 may also include a cache or cache memory for local storage of operating data or instructions associated with the evaluation.

The memory 604 may include one or more memory components, which may each be volatile memory or non-volatile memory. For example, the volatile memory of the memory 604 may be random access memory (RAM) (e.g., a DRAM module, such as DDR SDRAM) or another form of volatile memory. In another example, the non-volatile memory of the memory 604 may be a disk drive, a solid-state drive, flash memory, phase-change memory, or another form of non-volatile memory configured for persistent electronic information storage. The memory 604 may also include other types of devices, now existing or hereafter developed, configured for storing data or instructions for processing by the processor 602.

The memory 604 can include data for immediate access by the computing device 600. For example, the memory 604 may include executable instructions, application data, an operating system, or a combination thereof accessible by the processor 602. The executable instructions, the application data, the operating system, or a combination thereof may be loaded or copied, in whole or in part, from non-volatile memory to volatile memory to be executed by the computing device 600. For example, the executable instructions and application data may include instructions and data for, as described herein, machine synchronization; kinematic model calculations, selections, or configurations; homepoint setting; path plan identification; and machine control (e.g., autonomous control).

The memory 604 may include executable instructions or application data associated with a communication interface 608. The communication interface 608 may be or may include a transmitter and/or a receiver. The communication interface 608 may facilitate communication between, for example, leader and follower machines. For example, the communication interface 608 may enable data exchange over a communication path allowing for real-time synchronization and data updates between the machines.

The user interface 606 may include one or more input interfaces and/or output interfaces. An input interface may be, for example, a positional input device, such as a mouse, touchpad, touchscreen, or the like; a keyboard; or another suitable human or machine interface device. An output interface may be, for example, a display, such as a liquid crystal display, a cathode-ray tube, a light emitting diode display, or other suitable display. As such, an operator may interact with a path planning software, select or configure machines and implements, view real-time positional data, and monitor the status of machine synchronization through the user interface 606. Additionally, the user interface 606 may provide visual indicators and alerts to assist the operator in maintaining optimal machine operation and synchronization.

The computing device 600 may include additional components. For example, the computing device 600 may include power management units, various sensors for monitoring environmental conditions and machine status, and interfaces for connecting to external storage devices or other peripherals. These components ensure that the computing device 600 operates reliably in various agricultural environments and can handle the processing and communication demands of the machine sync system.

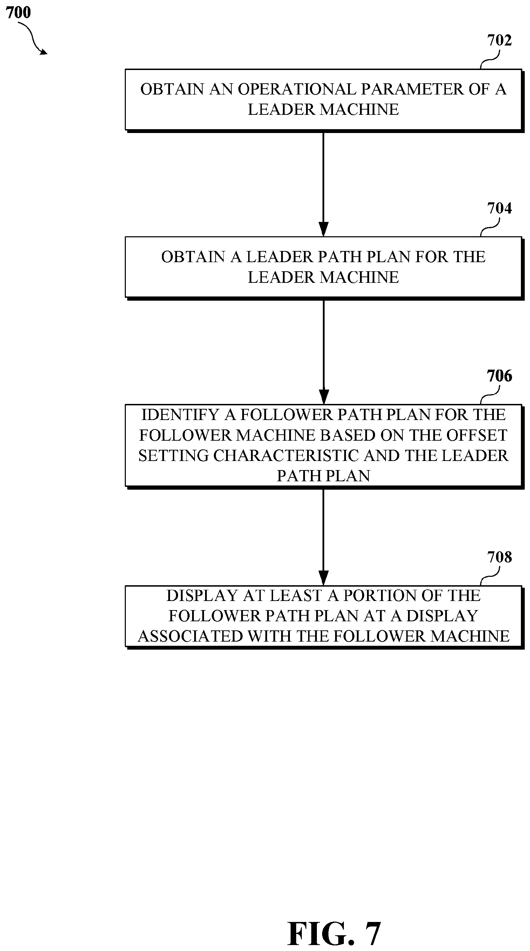

To further describe some implementations in greater detail, reference is next made to examples of techniques which may be performed by or using a system for setting a homepoint based on kinematic models. FIG. 7 is a flowchart of an example of a technique 700 for generating a follower path plan for a follower machine based on a leader path plan of a leader machine. The technique 700 can be executed using computing devices, such as the systems, hardware, and software described with respect to FIGS. 1-6. The technique 700 can be performed, for example, by executing a machine-readable program or other computer-executable instructions, such as routines, instructions, programs, or other code. The steps, or operations, of the technique 700, or another technique, method, process, or algorithm described in connection with the implementations disclosed herein can be implemented directly in hardware, firmware, software executed by hardware, circuitry, or a combination thereof. The technique 700 can be executed by a path planning software, such as the path planning software 112 of FIG. 1.

For simplicity of explanation, the technique 700 is depicted and described herein as a respective series of steps or operations. However, the steps or operations of the technique 700 in accordance with this disclosure can occur in various orders and/or concurrently. Additionally, other steps or operations not presented and described herein may be used. Furthermore, not all illustrated steps or operations may be required to implement a technique in accordance with the disclosed subject matter.

At 702, an operational parameter of the leader machine is obtained. In an example the leader machine can be a combine that includes an auger, and the follower machine can be or include a cart (e.g., a grain cart) that is to receive harvested crop (e.g., grain) from the combine via the auger. As such, the operational parameter of the leader machine can be or include the length of the auger and/or an offset location of the endpoint (e.g., snout) of the auger with respect to a reference point or line (e.g., centerline or a GPS unit) of the leader machine. More broadly, the leader machine may be referred to as a first machine and the follower machine may be referred to as a second machine. The first machine and the second machine are such that a distance between them can be set based on an operational parameter associated with the first machine and/or the second machine.

Obtaining the operational parameter may include identifying an alignment point (or a homepoint) between the leader machine and the follower machine.

In an example, the operational parameter can be obtained using a leader kinematic model of the leader machine. To illustrate, the operational parameter may be obtained based on the leader dimensions and where an auger is relative to a GPS unit of the leader. In an example, the operational parameter can be obtained using both of the leader kinematic model and a follower kinematic model of the follower machine. To illustrate, the follower kinematic model may be used to specifically align a particular aspect of the leader machine (e.g., the snout of the auger) to a particular aspect of the follower machine (e.g., the middle of a grain cart).

The leader kinematic model may be obtained in any number of ways. For example, the leader kinematic model may be retrieved based on an identifier, such as the VIN of the leader machine. Thus, the technique 700 may retrieve (e.g., access) pre-stored kinematic parameters, such as from a configuration database. In an example, the leader machine can be identified, and its kinematic model obtained based on its proximity to the follower machine, utilizing sensors or communication signals to establish a connection between the machines. In an example, the leader kinematic model may be generated or refined using real-time data from onboard sensors, such as GPS units, cameras, and other positional tracking devices. This data can be processed to determine the specific characteristics of the leader machine, such as, for example, turret offset, auger length, and other relevant parameters. As such, in an example, the leader machine may be a combine and the leader kinematic model may include parameters usable to correlate an auger position to the coordinates of the leader machine. As such, the leader kinematic model can include an auger offset location. With respect to some leader kinematic models, the auger offset location can be determined using a turret offset as an intermediate transformation. As such, the leader kinematic model may include as a turret offset and an auger length.

The follower kinematic model can include an implement kinematic model. As such, the follower kinematic model may include parameters such as the drawbar location and cart dimensions. The follower machine may include an autonomous navigation system to adjust its position based on a follower path plan and/or the homepoint.

The follower kinematic model may be obtained in any number of ways. In an example, the follower machine may be identified, such as based on an identifier (e.g., a VIN). Once identified, a pre-stored follower kinematic model can be retrieved, such as from a configuration database. In an example, the follower kinematic model may be generated based on real-time sensor data, including GPS coordinates and positional data from onboard sensors. In an example, the technique 700 may enable an operator to manually input or adjust parameters of the follower kinematic model through one or more user interfaces.

The implement kinematic model may be obtained by identifying a specific implement attached to the follower machine and retrieving its corresponding kinematic parameters from a configuration database. In another example, the implement kinematic model may be dynamically generated using data from sensors attached to the implement, such as length, width, and attachment point measurements.

At 704, a leader path plan for the leader machine is obtained. The leader path may be obtained from the leader machine itself. The leader path plan can be obtained from a remote system, such as the remote configuration system 114 of FIG. 1.

At 706, the follower path plan is identified for the follower machine based on the operational parameter and the leader path plan. As described herein, the follower path plan can mirror the leader path plan and is offset from the leader path plan according to the operational parameter and a location of the follower machine relative to the leader machine.

The follower path plan can be identified (e.g., generated) at the follower machine or remotely. In an example, a path planning software of the follower machine, such as the path planning software 112 of FIG. 1, may obtain relevant dimensions of the leader machine and the leader path plan and generate the follower path plan locally (i.e., on board). In another example, the follower path plan can be generated remotely (i.e., off board) by a configuration system, such as the configuration system 114 of FIG. 1. For example, the follower machine may transmit a follower path plan request to the configuration system in response to which the configuration system generates the follower path plan and transmits the follower path plan to the follower machine. The follower path plan request can include an identifier of the leader machine, which the configuration system can use to identify the relevant dimensions of the leader machine and the leader path plan.

At 708, at least a portion of the follower path plan is displayed at a display associated with the follower machine, such as described with respect to FIG. 5.

In an example, a homepoint position can be set based on the leader kinematic model. In another example, the homepoint position can be calculated based on both of the leader kinematic model and the follower kinematic model (which may include an implement kinematic model). As described above, the homepoint enables an alignment of the follower machine to the leader machine. For example, the alignment may align an unloading auger of the leader machine to a relative position of a cart attached to the follower machine. In an example, the relative position can be the center of the cart. However, the relative position can be any other position within the cart suitable for aligning the unloading auger. In an example, the relative position can be selected (e.g., determined, identified, set, etc.) by an operator of the follower machine or the leader machine. Additionally, GPS coordinates associated with the leader machine may be received to assist in this calculation. Various transformations and calculations may be performed to calculate the homepoint, as described herein.

In some implementations, the follower path plan may be generated by the remote configuration system and then transmitted to the follower machine. As such, the technique 700 may receive, such as from the follower machine, identifiers of the leader machine and the follower machine, may obtain the operational parameter of the leader path plan, may obtain the leader path of the leader machine, and may identify the follower path plan at the remote configuration system and then cause the follower path plan to be transmitted for display at and control of the follower machine.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

Persons skilled in the art will understand that the various embodiments of the present disclosure and shown in the accompanying figures constitute non-limiting examples, and that additional components and features may be added to any of the embodiments discussed hereinabove without departing from the scope of the present disclosure. Additionally, persons skilled in the art will understand that the elements and features shown or described in connection with one embodiment may be combined with those of another embodiment without departing from the scope of the present disclosure to achieve any desired result and will appreciate further features and advantages of the presently disclosed subject matter based on the description provided. Variations, combinations, and/or modifications to any of the embodiments and/or features of the embodiments described herein that are within the abilities of a person having ordinary skill in the art are also within the scope of the present disclosure, as are alternative embodiments that may result from combining, integrating, and/or omitting features from any of the disclosed embodiments.

Use of the term "optionally" with respect to any element of a claim means that the element may be included or omitted, with both alternatives being within the scope of the claim. Additionally, use of broader terms such as "comprises," "includes," and "having" should be understood to provide support for narrower terms such as "consisting of," "consisting essentially of," and "comprised substantially of." Accordingly, the scope of protection is not limited by the description set out above, but is defined by the claims that follow, and includes all equivalents of the subject matter of the claims.

In the preceding description, reference may be made to the spatial relationship between the various structures illustrated in the accompanying drawings, and to the spatial orientation of the structures. However, as will be recognized by those skilled in the art after a complete reading of this disclosure, the structures described herein may be positioned and oriented in any manner suitable for their intended purpose. Thus, the use of terms such as "above," "below," "upper," "lower," "inner," "outer," "left," "right," "upward," "downward," "inward," "outward," "horizontal," "vertical," etc., should be understood to describe a relative relationship between the structures and/or a spatial orientation of the structures. Those skilled in the art will also recognize that the use of such terms may be provided in the context of the illustrations provided by the corresponding figure(s).

Additionally, terms such as "approximately," "generally," "substantially," and the like should be understood to allow for variations in any numerical range or concept with which they are associated and encompass variations on the order of 25% (e.g., to allow for manufacturing tolerances and/or deviations in design). For example, the term "generally parallel" should be understood as referring to configurations in with the pertinent components are oriented so as to define an angle therebetween that is equal to 180° ± 25% (e.g., an angle that lies within the range of (approximately) 135° to (approximately) 225°). The term "generally parallel" should thus be understood as referring to encompass configurations in which the pertinent components are arranged in parallel relation.

Although terms such as "first," "second," "third," etc., may be used herein to describe various operations, elements, components, regions, and/or sections, these operations, elements, components, regions, and/or sections should not be limited by the use of these terms in that these terms are used to distinguish one operation, element, component, region, or section from another. Thus, unless expressly stated otherwise, a first operation, element, component, region, or section could be termed a second operation, element, component, region, or section without departing from the scope of the present disclosure.

Each and every claim is incorporated as further disclosure into the specification and represents embodiments of the present disclosure. Also, the phrases "at least one of A, B, and C" and "A and/or B and/or C" should each be interpreted to include only A, only B, only C, or any combination of A, B, and C.

## Claims

1. A method, comprising:
obtaining an operational parameter of a leader machine;
obtaining a leader path plan for the leader machine;
identifying a follower path plan for a follower machine based on the operational parameter and the leader path plan; and
displaying at least a portion of the follower path plan at a display associated with the follower machine.

2. The method of claim 1, wherein obtaining the operational parameter of the leader machine comprises:
obtaining a leader kinematic model of the leader machine; and
obtaining the operational parameter of the leader machine based on the leader kinematic model.

3. The method of claim 2, wherein the leader kinematic model comprises an auger offset location.

4. The method of claim 1,wherein the follower path plan is identified at the follower machine.

5. The method of claim 1, wherein obtaining the operational parameter of the leader machine comprises:
identifying an endpoint of an auger of the leader machine; and
aligning the endpoint of the auger to a relative position of the follower machine.

6. The method of claim 1, further comprising:
autonomously operating the follower machine according to the follower path plan.

7. The method of claim 1, wherein the leader machine is a combine harvester, and the follower machine is a tractor.

8. A system, comprising:
one or more memories; and
one or more processors, the processors configured to execute instructions stored in the one or more memories to:
obtain an operational parameter of a leader machine;
obtain a leader path plan for the leader machine;
identify a follower path plan for a follower machine based on the operational parameter and the leader path plan; and
display at least a portion of the follower path plan at a display associated with the follower machine.

9. The system of claim 8, wherein the instructions to obtain the operational parameter of the leader machine comprise instructions to:
obtain a leader kinematic model of the leader machine; and
obtain the operational parameter based on the leader kinematic model.

10. The system of claim 9, wherein the leader kinematic model comprises an auger offset location.

11. The system of claim 9, wherein the follower path plan is identified at a configuration system that is remote from the follower machine.

12. The system of claim 8, wherein the instructions to obtain the operational parameter of the leader machine comprise instructions to:
identify an endpoint of an auger of the leader machine; and
align the endpoint of the auger to a relative position of a cart attached to the follower machine.

13. The system of claim 8, wherein the one or more processors are further configured to execution instructions stored in the one or more memories to: autonomously operate the follower machine according to the follower path plan.

14. The system of claim 8, wherein the leader machine is a combine harvester, and the follower machine is a tractor.

15. One or more non-transitory computer readable media storing instructions operable to cause one or more processors to perform operations of the method of any one of claims 1 to 7.
